# EUROPEAN PATENT SPECIFICATION

(11) **EP 3 307 203 B1**
(45) Date of publication and mention of the grant of the patent: **27.04.2022**
(21) Application number: 16738546.7
(22) Date of filing: 24.05.2016
(51) Int. Cl.: A61C 17/028, A61C 17/02

(54) **NOZZLE FOR AN ORAL CLEANING DEVICE**
DÜSE FÜR EINE MUNDREINIGUNGSVORRICHTUNG
BUSE POUR UN DISPOSITIF DE NETTOYAGE BUCCAL

(30) Priority: 15.06.2015 US 201562175499 P
(43) Date of publication of application: 18.04.2018
(73) Proprietor: Koninklijke Philips N.V., 5656 AG Eindhoven (NL)
(72) Inventor: JOHANSKI, Brian, 5656 AE Eindhoven (NL); BALAKRISHNAN, Anandh, 5656 AE Eindhoven (NL)
(74) Representative: Philips Intellectual Property & Standards
(86) International application number: PCT/IB2016/053024
(87) International publication number: WO 2016/203327

(56) References cited:
- WO-A1-98/53901
- TW-A- 201 601 841
- US-A1- 2010 167 236
- US-A1- 2010 331 769
- US-A1- 2011 117 517

## Description

### Field of the Invention

The present disclosure is directed generally to oral care appliances for cleaning teeth using coordinated bursts of air and fluid, and particularly to a nozzle design that recaptures and utilizes residual liquid.

### Background

US 2011/0117517 A1 discloses a liquid jet apparatus for dental treatments. In certain embodiments, the nozzle (or surface portions adjacent the liquid) can be formed from a hydrophobic material.

WO 98/53901 discloses an ultrafiltration device for the sterilization of water, comprising a filter housing provided with an inlet and an outlet connection and provided in said filter housing a bundle of capillary ultrafiltration membranes. At least one hydrophobic capillary membrane is included in the bundle of capillary hydrophilic ultrafiltration membranes.

Periodontal diseases are thought to be infectious diseases caused by bacteria present in dental plaques and biofilms. Removal of dental plaques and biofilms is highly important for the health of oral cavities. Tooth brushing is a highly effective method to remove dental plaque and biofilms from the teeth, provided the oral cleaning device is actually used in such a fashion to reach all areas where plaque resides.

Oral cleaning devices that clean the teeth with streams or bursts of liquid or a mixture of liquid droplets and air are effective at disrupting dental plaques and biofilm in the oral cavity, particularly in the interproximal areas of the teeth. These devices generally create liquid droplets when the liquid is brought into contact with a high velocity stream of air using a pump or similar arrangement.

Coordinated bursts of liquid and air use far less liquid per cleaning compared to a continuous stream of liquid. As a result, less liquid is used per cleaning and the user does not accumulate an uncomfortable volume of liquid in the mouth. This is particularly beneficial if the liquid is a mouthwash or similar liquid which shouldn't be swallowed by the user. Additionally, the alternating bursts of air and liquid provide superior dental plaques and biofilm removal and interdental cleaning.

Existing oral cleaning devices using coordinated bursts of liquid and air typically have a nozzle or other elongated structure that connects the handle of the device and an opening at the distal end of the nozzle through which the bursts of liquid and air are delivered to the teeth and gums. Between bursts, and/or when the cleaning device is turned off, residual liquid collects in the nozzle or elongated structure. Rather than forming a droplet of liquid that can be utilized during a subsequent burst, this residual water must be cleared from the nozzle or elongated structure.

Accordingly, there is a need in the art for oral cleaning devices that recapture the residual liquid from the nozzle and configure the recaptured liquid into one or more droplets of liquid.

### Summary of the Invention

The invention is defined by the independent claims. The dependent claims define advantageous embodiments.

The present disclosure is directed to inventive oral cleaning devices with nozzles that break a burst of liquid into multiple optimal sized bursts of liquid, or recapture residual liquid and configure the recaptured liquid into multiple droplets of liquid for subsequent use. Various embodiments and implementations herein are directed to oral cleaning devices in which the nozzle is structured to automatically recapture the liquid that remains in the nozzle after a previous burst. The nozzle contains a structure such as patterned hydrophobic and/or hydrophilic regions, or patterned regions of alternating texture, that configure the residual liquid into multiple droplets that will form part of the coordinated bursts of liquid and air in the use of the device. Using the various embodiments and implementations herein, the oral cleaning device can conserve liquid and deliver multiple optimally sized droplets or shots during use.

It should be appreciated that all combinations of the foregoing concepts and additional concepts discussed in greater detail below (provided such concepts are not mutually inconsistent) are contemplated as being part of the inventive subject matter disclosed herein. In particular, all combinations of claimed subject matter appearing at the end of this disclosure are contemplated as being part of the inventive subject matter disclosed herein.

These and other aspects of the invention will be apparent from and elucidated with reference to the embodiment(s) described hereinafter.

### Brief Description of the Drawings

In the drawings, like reference characters generally refer to the same parts throughout the different views. Also, the drawings are not necessarily to scale, emphasis instead generally being placed upon illustrating the principles of the invention.
FIG. 1 is a schematic representation of an oral cleaning device in accordance with an example which is not part of the invention.
FIG. 2 is a schematic representation of the nozzle portion of an oral cleaning device in accordance with an example which is not part of the invention.
FIG. 3 is a schematic representation of residual liquid in the nozzle portion of an illustrative oral cleaning device which is not part of the invention.
FIG. 4 is a schematic representation of residual liquid in the nozzle portion of an illustrative oral cleaning device which is not part of the invention.
FIG. 5 is a schematic representation of the nozzle portion of an oral cleaning device in accordance with an embodiment.
FIG. 6 is a schematic representation of the nozzle portion of an oral cleaning device in accordance with an embodiment.

### Detailed Description of Embodiments

The present disclosure describes various embodiments of an oral cleaning device that delivers coordinated bursts of liquid and air. More generally, Applicants have recognized and appreciated that it would be beneficial to provide an oral cleaning device in which the nozzle is structured to recapture residual liquid and automatically configure the recaptured liquid into small droplets of liquid that will be utilized as bursts or pulses of liquid in the next cleaning session. A particular goal of utilization of certain embodiments of the present disclosure is to conserve liquid and deliver more bursts or pulses during use, therefore more efficiently cleaning the oral cavity, particularly the interdental spaces.

Using the various embodiments and implementations herein, for example, the improved nozzle design can split a single "shot" of fluid into two separate shots, thereby increasing impact and improving performance. Various embodiments and implementations may utilize hydrophobic structures or other means in the nozzle to create an air gap the residual liquid (for example, "water slug") in the nozzle, splitting it into two droplets and thereby two shots of liquid in a burst. This provides for better impact forces and better plaque removal.

The improved nozzle design disclosed and described herein can be used with any oral care appliance for cleaning teeth using coordinated bursts of air and fluid. One example of an oral care appliance that the improved nozzle design can be used with is any Philips Airfloss^{®} device.

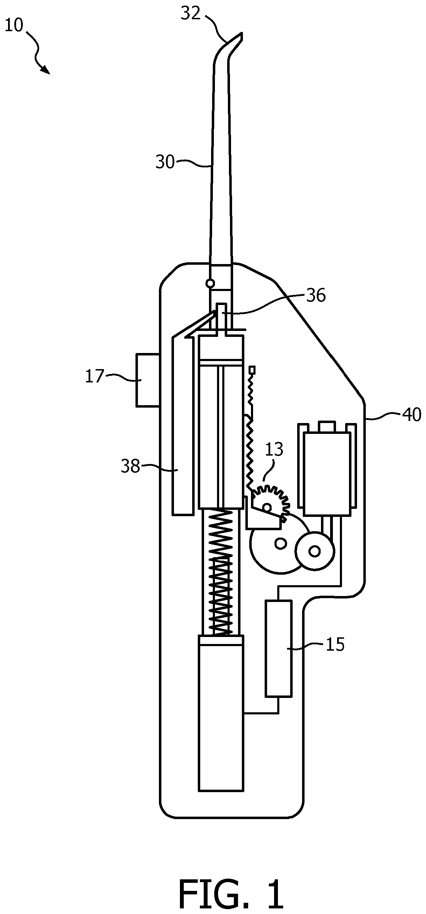

In view of the foregoing, various embodiments and implementations are directed to an oral cleaning device with an improved nozzle design that automatically recaptures residual liquid and configures the recaptured liquid into one or more shots of liquid for subsequent use. Referring to FIG. 1, in one embodiment, is a schematic cutaway representation of an oral cleaning device 10. Oral cleaning device 10 includes a nozzle 30 and a handle 40.

According to this embodiment, device 10 uses a mechanical spring-drive system 13 in the handle 40 to create the selected liquid droplet spray mode for dental cleaning. The mechanical spring-drive system 13 includes a motor and gear train arrangement with a drive gear, a plunger/piston that acts against a compression spring. A control unit 15 is included between a battery and the motor for control of the operation of the appliance. For example, control unit 15 can be activated or controlled by a power button or similar element 17 used to actuate the device. Movement of the spring-drive system 13 draws air into the device 10. Although device 10 is shown using a mechanical spring-drive system 13 to create the selected liquid droplet spray mode for dental cleaning in this embodiment, other systems to create coordinated bursts of liquid and air are possible.

According to an embodiment of device 10, elongated nozzle 30 extends outwardly from the device and can have a curved portion 32 at the distal end thereof, through which a spray of liquid droplets is directed for cleaning action against dental regions of the teeth. The curved portion 32 assists in convenient positioning of the nozzle 30 in the mouth by the user. At the proximal end 33 of the nozzle is an inlet orifice 36. Inlet orifice 36 can vary in size, typically between 0.5 mm and 10 mm.

Device 10 also includes an internal liquid reservoir 38 for a liquid such as water, mouthwash, cleaning liquid, or other liquid. Liquid in the reservoir is moved to the vicinity of the inlet orifice 36. When the spring-drive system 13 releases, air is expelled at high speed toward the inlet orifice 36. When the fast-moving air comes into contact with the liquid from the internal reservoir 38 which is adjacent inlet orifice 36, a spray of liquid droplets is produced which is expelled out through the nozzle 30.

The liquid droplets can be of various sizes, and the speed of the droplets can vary from relatively low speed, e.g. 10 meters per second, to a high speed of 200 meters per second or even greater. Typically, however, a 50 m/sec droplet velocity with droplets in a size range of 5 microns-0.5 mm will provide effective dental cleaning.

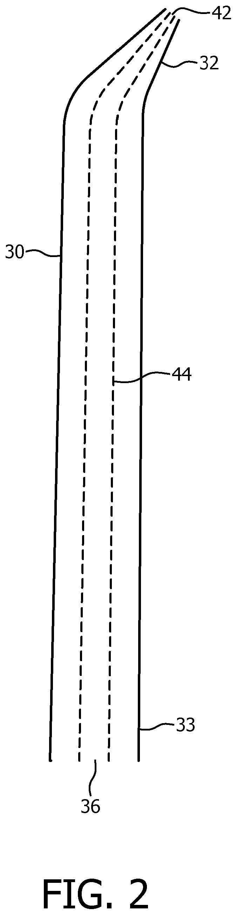

Referring to FIG. 2, in one example which is not part of the invention, is the nozzle 30 of oral cleaning device 10. The nozzle can have a curved portion 32 at the distal end, through which a spray of liquid droplets is directed for cleaning action against dental regions of the teeth, and which assists in positioning of the nozzle 30 in the mouth by the user. The distal end also includes an outlet orifice 42 through which the coordinated liquid droplets and air are directed. Outlet orifice 42 can vary in size. Nozzle 30 can include a conduit 44 for the transmission of the coordinated liquid droplets and air from inlet orifice 36 at the proximal end 33 of the nozzle to outlet orifice 42 at the distal end of the nozzle. Conduit 44 can be the same diameter as nozzle 30, or can have a diameter smaller than nozzle 30, as shown in FIG. 2.

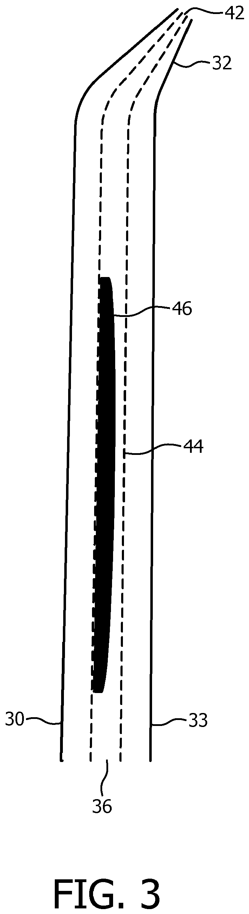

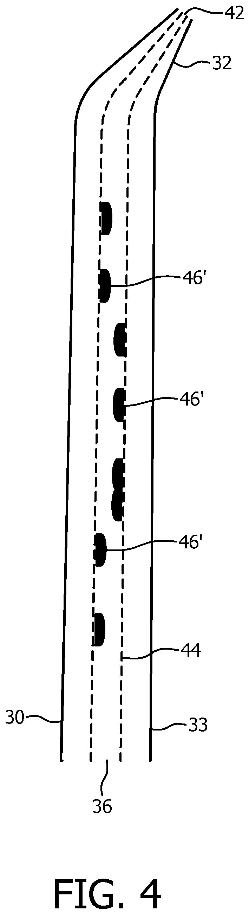

Following a cleaning session with oral cleaning device 10, there will be residual liquid 46 remaining inside nozzle 30 that was not expelled out of the outlet orifice 42. FIG. 3 shows a nozzle 30 with residual liquid 46 which remains inside the nozzle after a liquid air burst has been delivered. In an oral cleaning device 10, residual liquid 46 may be dispersed within the nozzle, can be a single large pool of liquid, can be several droplets of liquid (referred to as a "slug"), or a plurality of very small droplets of liquid. In the case of many small droplets of liquid 46', as shown in FIG. 4, the droplets are typically too small to be useful when the oral cleaning device is used again and these droplets are expelled from outlet orifice 42.

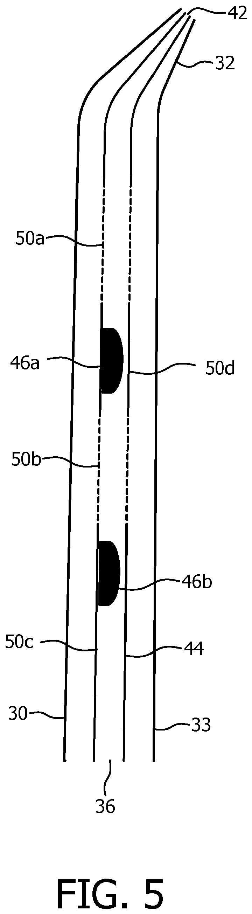

Referring to FIG. 5, in one embodiment, is a nozzle 30 structured or configured to recapture the residual liquid and form or configure it into one or more optimally sized droplets 46a, 46b. According to this embodiment, nozzle 30 includes one or more structures 50a and 50b which cause residual liquid 46 remaining inside the nozzle after a burst to automatically form into one or more optimally sized droplets 46a, 46b. Although shown as two alternating regions in FIG. 5, the structures 50 can be any number of regions from two to many regions, and can be alternating, or arranged in other patterns. According to an embodiment, the desired number and position of regions can be determined experimentally, and may depend on factors such as desired droplet size, the diameter of nozzle 30, the average volume of liquid remaining after a burst, and a wide variety of other factors.

In addition to the number regions, the size and/or shape of the automatically formed droplets 46a, 46b can be influenced or determined by the spacing and location of the regions. For example, regions that are spaced further apart may result in larger droplets, while regions that are spaced closer together may result in smaller droplets. According to an embodiment, the spacing of the regions can be determined experimentally, and may depend on factors such as desired droplet size, the diameter of nozzle 30, the average volume of liquid remaining after a burst, and a wide variety of other factors.

Various embodiments and implementations of the present disclosure utilize hydrophobicity or hydrophilicity in the flow path of the nozzle. According to an embodiment, structures 50a and 50b are hydrophobic regions of nozzle 30. For example, structures 50a and 50b may include or comprise a lining or coating that is substantially hydrophobic. As shown in FIG. 5, the hydrophobicity of structures 50a and 50b automatically repels residual liquid 46 and causes it to cluster in the non-hydrophobic regions 50c and 50d of nozzle 30, thereby forming discreet droplets 46a, 46b. The formed droplets can then be delivered in the next activation of the oral cleaning device 10, at which time they will be expelled from outlet orifice 42 and used in a pattern of coordinated bursts of liquid and air. According to one embodiment, therefore, the hydrophobicity of structures 50a and 50b can be of a nature that it does not interfere with delivery of bursts during use of the device. In other words, structures 50a and 50b can be structured or configured such that they do not disturb the size, shape, or configuration of liquid droplets during use of oral cleaning device 10. According to an embodiment, the hydrophobicity can be introduced by any material, coating, lining, or other structure sufficient to repel the liquid. For example, structures 50a and 50b may include or comprise a wax-like substance or material, a Teflon^{®} coating, or any of a wide variety of materials.

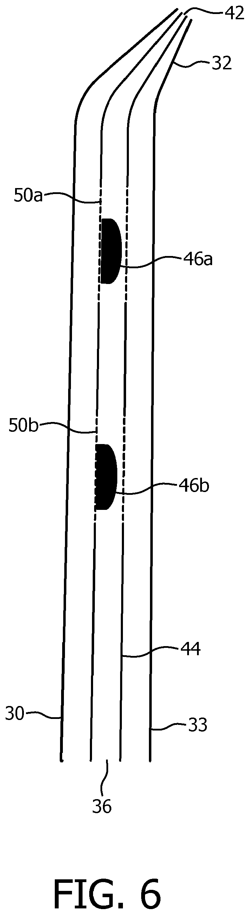

Alternatively, as shown in FIG. 6, structures 50a and 50b may include or comprise a lining or coating that is substantially hydrophilic. The hydrophilic nature of structures 50a and 50b automatically attracts residual liquid 46 and causes it to cluster in the hydrophilic regions of nozzle 30, thereby forming discreet droplets 46a, 46b. The formed droplets can then be delivered in the next activation of the oral cleaning device 10, at which time they will be expelled from outlet orifice 42 and used in a pattern of coordinated bursts of liquid and air. According to one embodiment, therefore, the hydrophilic forces of structures 50a and 50b can be of a nature that it does not interfere with delivery of bursts during normal use of the device. In other words, structures 50a and 50b can be structured or configured such that they do not disturb the size, shape, or configuration of liquid droplets during use of oral cleaning device 10. According to an embodiment, the material, coating, lining, or other structure can be any material that attracts the liquid.

According to an embodiment, structures 50a and 50b are super-smooth or super-rough regions of nozzle 30. Referring to FIG. 5, for example, structures 50a and 50b comprise a super-rough microscopic or nanoscopic architecture on their surfaces that minimizes liquid's adhesion to that surface. Referred to as the "lotus effect," these rough surfaces result in hydrophobicity or superhydrophobicity as a result of the very high contact angles between the surface and the liquid. Due to the hydrophobicity of the super-rough regions, the residual liquid 46 in nozzle 30 will not collect on structures 50a and 50b, instead collecting in discreet droplets of a desired size in the alternating, neighboring regions 50c, 50d. The super-rough regions can be created using microscopic or nanoscopic architectures, or a combination of these architectures and coatings such as fluorochemical or silicone treatments, among many other possible coatings.

According to an embodiment, the one or more structures 50a and 50b are configured or structured to interact differently with different liquids. For example, the structure may only exert a hydrophobic or other automatic organizing force on a liquid comprising mostly water, and may exert little or no force on another liquid such as a mouthwash. Accordingly, the liquid and/or the one or more structures 50a and 50b can be specifically designed to control the properties of the liquid in nozzle 30.

According to an embodiment, the one or more structures 50a and 50b in the nozzle are patterned or random hydrophobic and/or hydrophilic regions, or patterned or random textured regions, that break down a burst of liquid into multiple optimal sized bursts, and/or configure residual liquid into multiple droplets. For example, structures 50a and 50b can be a pattern of hydrophobic regions, hydrophilic regions, or alternating hydrophobic and hydrophilic regions, where each region is separated from a neighboring region by the same spacing. As another example, structures 50a and 50b form a pattern where each region is separated from a neighboring region by variable distances. As yet another example, structures 50a and 50b form a pattern where the regions are randomly spaced. In addition to a pattern of hydrophobic regions, hydrophilic regions, or alternating hydrophobic and hydrophilic regions, structures 50a and 50b can be any random or non-random pattern of textures, including but not limited to smooth and/or rough regions. As yet another example, the structures can be a combination of textured regions, hydrophobic regions, and/or hydrophilic regions.

According to an embodiment, the one or more structures 50a and 50b in nozzle 30 exert a force on the liquid that is passing through the nozzle during use of oral cleaning device 10. This effect may be in conjunction with, or entirely separate from, recapture of residual liquid 46. For example, the one or more structures 50a and 50b in nozzle 30 could assist in the formation of liquid droplets of a desired size and/or shape during use of the device. As the coordinated bursts of liquid travel through nozzle 30 from inlet orifice 36 to outlet orifice 42, the one or more structures 50a and 50b can cause the liquid pulses or bursts to become smaller or larger. In the case of hydrophobicity of structures 50a and 50b, for example, the liquid droplets may decrease in size and/or change shape as they pass through the hydrophobic regions. These smaller droplets may be more efficient at cleaning the mouth.

According to yet another embodiment, the oral cleaning device 10 does not include a system that disperses the liquid into coordinated bursts of liquid and air. Instead, the device uses a constant stream of liquid that is pushed from the interior of device 10 through nozzle 30 and out outlet orifice 42. According to this embodiment, the nozzle 30 includes one or more structures 50a and 50b that cause dispersion of the liquid that is passing through the nozzle during use of oral cleaning device 10 into smaller droplets rather than a constant stream of liquid. For example, the hydrophobicity of one or more structures 50a and 50b can break the constant stream of liquid into smaller droplets of a desired size as the liquid passes through nozzle 30. Accordingly, the liquid is configured into droplets, which are more efficient at cleaning the mouth, in the nozzle without other structures in the handle or elsewhere in the device. According to this embodiment, the formation of droplets is accomplished entirely through one or more structures 50a and 50b.

All definitions, as defined and used herein, should be understood to control over dictionary definitions, and/or ordinary meanings of the defined terms.

The indefinite articles "a" and "an," as used herein in the specification and in the claims, unless clearly indicated to the contrary, should be understood to mean "at least one."

The phrase "and/or," as used herein in the specification and in the claims, should be understood to mean "either or both" of the elements so conjoined, i.e., elements that are conjunctively present in some cases and disjunctively present in other cases. Multiple elements listed with "and/or" should be construed in the same fashion, i.e., "one or more" of the elements so conjoined. Other elements may optionally be present other than the elements specifically identified by the "and/or" clause, whether related or unrelated to those elements specifically identified.

As used herein in the specification and in the claims, "or" should be understood to have the same meaning as "and/or" as defined above. For example, when separating items in a list, "or" or "and/or" shall be interpreted as being inclusive, i.e., the inclusion of at least one, but also including more than one, of a number or list of elements, and, optionally, additional unlisted items. Only terms clearly indicated to the contrary will refer to the inclusion of exactly one element of a number or list of elements. In general, the term "or" as used herein shall only be interpreted as indicating exclusive alternatives (i.e. "one or the other but not both") when preceded by terms of exclusivity.

As used herein in the specification and in the claims, the phrase "at least one," in reference to a list of one or more elements, should be understood to mean at least one element selected from any one or more of the elements in the list of elements, but not necessarily including at least one of each and every element specifically listed within the list of elements and not excluding any combinations of elements in the list of elements. This definition also allows that elements may optionally be present other than the elements specifically identified within the list of elements to which the phrase "at least one" refers, whether related or unrelated to those elements specifically identified.

## Claims

1. An elongated nozzle (30) for an oral cleaning device (10), the nozzle comprising:
a proximal end (33) with an inlet orifice (36);
a distal end (32) with an outlet orifice (42), wherein the outlet orifice is in fluid communication with the inlet orifice by means of a conduit (44); and
a structure (50a, 50b) located on an interior portion of the conduit (44) between the inlet orifice (36) and the outlet orifice (42), **characterized in that** the structure (50a, 50b) comprises patterned hydrophobic and/or hydrophilic regions, or patterned regions of alternating texture, that configure a liquid in the conduit (44) into two or more liquid droplets.

2. The elongated nozzle of claim 1, wherein the hydrophobic regions comprise a hydrophobic coating.

3. The elongated nozzle of claim 1, wherein the hydrophobic regions comprise a hydrophobic microstructure.

4. The elongated nozzle of claim 1, wherein the structure comprises a plurality of alternating hydrophobic and non-hydrophobic regions.

5. An oral cleaning device (10) comprising:
an elongated nozzle (30) as claimed in any of the preceding claims;
a liquid reservoir (38) wherein in operation liquid is moved from the liquid reservoir into the inlet orifice (36);
a mechanical spring-drive gear system (13) configured to drive a plunger toward the proximal end of the nozzle with sufficient force that air acted on by the plunger is forced into the nozzle at a high rate of speed sufficient to create a burst of liquid droplets when the moving air comes into contact with the liquid; and
an actuator (17) for activating a control unit (15) configured to control the mechanical spring-drive gear system to drive the plunger.

## Patentansprüche

1. Eine längliche Düse (30) für ein Gerät zur oralen Reinigung (10). Die Düse umfasst:
Ein proximales Ende (33) mit einer Einlassöffnung (36) ;
Ein distales Ende (32) mit einer Auslassöffnung (42), wobei die Auslassöffnung in flüssiger Verbindung mit der Einlassöffnung mithilfe eines Kanals (44) steht; und Eine Struktur (50a, 50b), welche sich im inneren Teil des Kanals (44) zwischen der Einlassöffnung (36) und der Auslassöffnung (42) befindet, **dadurch gekennzeichnet, dass** die Struktur (50a, 50b) hydrophobe und/oder hydrophile Bereiche, oder gemusterte Bereiche mit wechselnder Textur, umfasst, welche eine Flüssigkeit im Kanal (44) in zwei oder mehr flüssige Tröpfchen konfigurieren.

2. Die längliche Düse von Anspruch 1, wobei die hydrophoben Bereiche eine hydrophobe Beschichtung umfassen.

3. Die längliche Düse von Anspruch 1, wobei die hydrophilen Bereiche eine hydrophile Beschichtung umfassen.

4. Die längliche Düse von Anspruch 1, wobei die Struktur mehrere sich abwechselnde hydrophobe und hydrophile Bereiche umfasst.

5. Ein Gerät zur oralen Reinigung (10), umfassend:
Eine längliche Düse (30) wie in einem der vorangehenden Ansprüche beansprucht; Einen Flüssigkeitstank (38), wobei die Betriebsflüssigkeit vom Flüssigkeitstank in die Einlassöffnung (36) transportiert wird;
Ein mechanisches System mit federbetriebenen Zahnrädern (13), konfiguriert, um ein Tauchstück mit ausreichender Geschwindigkeit in das proximale Ende der Düse hineinzutreiben, damit die Luft, auf welche das Tauchstück wirkt, mit großer Geschwindigkeit in die Düse gedrückt wird, genug, um einen Ausstoß kleiner Flüssigkeitspartikel zu erzeugen, wenn die sich bewegende Luft in Kontakt mit der Flüssigkeit kommt; und Ein Betätigungselement (17) zum Aktivieren einer Steuerungseinheit (15), konfiguriert, um das mechanische System mit federbetriebenen Zahnrädern zu steuern, welches das Tauchstück antreibt.

## Revendications

1. Une buse allongée (30) pour un dispositif de nettoyage buccal (10), la buse comprend:
une proximité proximale (33) avec un orifice d'entrée (36); une extrémité distale (32) avec un orifice de sortie (42), où l'orifice de sortie est en communication fluide avec l'orifice d'entrée au moyen d'un conduit (44); et une structure (50a, 50b) située sur la partie intérieure du conduit (44) entre l'orifice d'entrée (36) et l'orifice de sortie (42), **caractérisé par le fait que** la structure (50a, 50b) comprend des régions hydrophobes et hydrophiles à motifs, ou des régions à motifs de texture alternée, qui configure un liquide dans le conduit (44) en deux ou plusieurs gouttelettes de liquide.

2. Une buse allongée de la revendication 1, où les régions hydrophobes comprennent un revêtement hydrophobe.

3. Une buse allongée de la revendication 1, où les régions hydrophobes comprennent une microstructure hydrophobe.

4. Une buse allongée de la revendication 1, où la structure comprend une pluralité de régions hydrophobes et non-hydrophobes.

5. Un dispositif de nettoyage buccal (10) comprend:
une buse allongée (30) comme revendiquée selon l'une quelconque des revendications précédentes;
un réservoir de liquide (38) où le liquide utilisé est déplacé depuis le réservoir de liquide dans l'orifice d'entrée (36); un système mécanique d'engrenage à ressort (13) configuré pour entraîner un piston vers l'extrémité proximale de la buse avec une force suffisante pour que l'air actionné par le piston soit entraîné dans la buse à une vitesse élevée suffisante pour créer une explosion de gouttelettes de liquide lorsque l'air en mouvement vient en contact avec le liquide; et un actionneur (17) pour activer l'unité de contrôle (15) configuré pour contrôler un système mécanique d'engrenage à ressort pour entraîner le piston.
